# EUROPEAN PATENT APPLICATION

(11) **EP 4 036 172 A1**
(43) Date of publication of application: **03.08.2022**
(21) Application number: 20867612.2
(22) Date of filing: 25.09.2020
(51) Int. Cl.: C08L 77/00, C08L 77/02, C08L 77/06, C08L 77/10, C08K 5/544, C08K 7/04, C08J 5/04

(54) **HIGH-STRENGTH LONG-FIBER REINFORCED POLYAMIDE RESIN COMPOSITION OBTAINED BY MELT BLENDING ALIPHATIC POLYAMIDE RESIN AND AROMATIC POLYAMIDE RESIN**

(30) Priority: 27.09.2019 KR 20190119651; 24.09.2020 KR 20200124038
(71) Applicant: Kolon Plastics, Inc., Gyeongsangbuk-do 39537 (KR)
(72) Inventor: SEO, Seong Won, Gimcheon-si Gyeongsangbuk-do 39537 (KR)
(74) Representative: Ter Meer Steinmeister & Partner
(86) International application number: PCT/KR2020/013025
(87) International publication number: WO 2021/060898

(57) **Abstract**

The present invention relates to a polyamide resin composition and a molded product manufactured therefrom. More particularly, the present invention relates to a polyamide resin composition having excellent mechanical strength, impact resistance, and long-term thermal stability, and being applicable to parts requiring high strength, and a molded product manufactured therefrom. The polyamide resin composition includes: (a) a polyamide resin in which an aliphatic polyamide resin and an aromatic polyamide resin are blended in a weight ratio of 3:1 to 5:1; (b) a coupling agent having both an amine functional group and a silane functional group; (c) a heat stabilizer; and (d) a long-fiber reinforcement. The polyamide resin composition according to the present invention has excellent mechanical properties and long-term heat resistance, thereby having high strength and being capable of preventing deformation, and thus a molded product having improved long-term reliability can be provided.

## Description

### [Technical Field]

The present invention relates to a high-strength long-fiber reinforced polyamide resin composition, and more particularly, to a high-strength long-fiber reinforced polyamide resin composition formed through melt blending of an aliphatic polyamide resin and an aromatic polyamide resin, which has excellent mechanical strength, impact resistance, and long-term thermal stability, and can be applied to parts requiring high strength.

### [Background Art]

Polyamide resins, represented by nylon 6 and nylon 66, have properties such as mechanical strength, heat resistance, wear resistance, chemical resistance, and the like, and thus are spotlighted as a material applicable to various industries.

However, the polyamide resins have poor long-term dimensional stability and a problem that mechanical properties are deteriorated when water is absorbed, and in particular, a relatively poor CTI (Comparative Tracking Index), one of electrical properties.

In addition, nylon 6 and nylon 66 respectively have a relatively low melting point of 230 °C and 260 °C and thus have insufficient heat resistance to be applied to semiconductor processing equipment, circuit boards, automobiles, and aircraft parts.

In order to solve the above problems, research has been steadily progressing, and as an example, blending them with other polymer resins having excellent heat resistance and little change in physical properties at relatively high humidity is being considered.

The polyamide resins reinforced with glass fibers have excellent strength, thermal stability, chemical resistance, specific gravity, etc. and are used as a metal replacement material for automobile mechanical parts, etc.

In particular, since automobile chassis parts are required to have strength and high physical properties with respect to vibration fatigue characteristics, studies on satisfying these requirements by using a reinforced polyamide resin composition are being conducted.

Korean Patent Laid-Open Publication No. 2018-0067049 discloses a polyamide hybrid composition reinforced with glass fibers and carbon fibers, Korea Patent Laid-Open Publication No. 2017-0110915 discloses a long fiber reinforced polyamide pellet and a polyamide resin composition and a molded product including the same, and Korea Patent No. 10-1893709 discloses a glass fiber-reinforced polyamide resin composition containing a poly(maleic anhydride) for improving strength of a welded portion.

However, these still fail in satisfying high-level strength and vibration-resistance fatigue properties of the polyamide resin composition required at a high level.

Accordingly, the present inventors have made efforts to solve these problems and as a result, confirmed that a polyamide resin and a long-fiber reinforcement are used with a heat stabilizer and an aminosilane-based coupling agent to obtain a polyamide resin molded product having excellent mechanical strength, impact resistance, and long-term thermal stability, completing the present invention.

### [Disclosure]

### [Technical Problem]

An object of the present invention is to provide a polyamide resin composition having excellent mechanical properties, impact resistance, and long-term thermal stability, and a molded product manufactured therefrom.

### [Technical Solution]

In order to achieve the above object, the present invention provides a polyamide resin composition including: (a) a polyamide resin in which an aliphatic polyamide resin and an aromatic polyamide resin are blended in a weight ratio of 3:1 to 5:1; (b) a coupling agent having both an amine functional group and a silane functional group; (c) a heat stabilizer; and (d) a long-fiber reinforcement.

In the present invention, the aliphatic polyamide resin is at least one selected from polyamide 6, polyamide 46, polyamide 66, polyamide 610, polyamide 612, polyamide 6/12, polyamide 1010, polyamide 11, polyamide 1012, polyamide 12, and polyamide 1212.

In the present invention, the aromatic polyamide resin is at least one selected from MACM10-18, PACM10-18, MACMI, MACMT, MXDI, MXD6, PA 6I, and PA 6T.

In the present invention, the aromatic polyamide resin is a mixture of PA 6T and PA 6I.

In the present invention, the coupling agent having both the amine functional group and the silane functional group is at least one selected from aminopropyltriethoxysilane, vinyltrimethoxysilane, triethoxyvinylsilane, vinyltrisdi-methoxyethoxysilane, trimethoxysilylpropenethiol, bistriethoxysilylpropyltetra-sulfide, triglycidoxypropyltrimethoxysilane, and triaminopropyltriethoxysilane.

In the present invention, the heat stabilizer is at least one selected from a phosphorus-based compound, a sulfur-based compound, and a metal salt compound.

In the present invention, the long-fiber reinforcement is at least one selected from a glass fiber, a carbon fiber, a calcium silicate fiber, a potassium titanate fiber, an aluminum borate fiber, a basalt fiber, a PE fiber, a PAN fiber, an arylate fiber, a PEEK fiber, a nylon fiber, and a PET fiber.

In the present invention, 35 to 43 wt% of the (a) polyamide resin in which the aliphatic polyamide resin and the aromatic polyamide resin are mixed in a weight ratio of 3:1 to 5:1, 0.2 to 1 wt% of (b) the coupling agent having the amine functional group and the silane functional group, 0.2 to 1 wt% of (c) the heat stabilizer, and 56 to 63 wt% of (d) the long-fiber reinforcement are included.

The present invention also provides a molded product manufactured therefrom from the polyamide resin composition.

### [Advantageous Effects]

The polyamide resin composition according to the present invention has excellent mechanical properties and long-term heat resistance, so that it is possible to prevent high strength and deformation, thereby providing a molded product having improved long-term reliability.

### [Best Mode]

In the present invention, it is confirmed that when a polyamide resin in which an aliphatic polyamide resin and an aromatic polyamide resin are mixed in a weight ratio of 3:1 to 5:1 is used, physical properties of tensile strength and flexural strength can be improved, and when a coupling agent having both an amine functional group and a silane functional group is used so as to bond the polyamide resin and the long-fiber reinforcement, mechanical strength of the polyamide resin may be improved by strongly bonding the polyamide resin and the long-fiber reinforcement.

In the present invention, a polyamide resin in which an aliphatic polyamide resin and an aromatic polyamide resin are mixed in a weight ratio of 3:1 to 5:1, a coupling agent having both an amine functional group and a silane functional group and a heat stabilizer are mixed together, and a long-fiber reinforcement is impregnated to prepare polyamide pellets, and specimens are prepared using the same. As a result of measuring the physical properties of the prepared specimens, it is confirmed that tensile strength, flexural strength, flexural modulus, and impact strength are improved.

Accordingly, in one aspect, the present invention relates to a polyamide resin composition including: (a) a polyamide resin in which an aliphatic polyamide resin and an aromatic polyamide resin are mixed in a weight ratio of 3:1 to 5:1; (b) a coupling agent having both an amine functional group and a silane functional group; (c) a heat stabilizer; and (d) a long-fiber reinforcement.

In the present invention, the polyamide resin is a polyamide resin in which an aliphatic polyamide resin and an aromatic polyamide resin are mixed in a weight ratio of 3:1 to 5:1. When the mixing ratio of the aliphatic polyamide resin and the aromatic polyamide resin is out of the above range, the effect of improving mechanical strength such as tensile strength and flexural strength may be insufficient.

The aliphatic polyamide resin is, for example, polyamide 6, polyamide 46, polyamide 66, polyamide 610, polyamide 612, polyamide 6/12, polyamide 1010, polyamide 11, polyamide 1012, polyamide 12, polyamide 1212, and the like, but the present invention is not limited thereto.

When 1 g of the aliphatic polyamide resin is added in 100 ml of 96,% sulfuric acid at 20 °C, the measured relative viscosity of the solution is 20 to 50, desirably 30 to 40, or more desirably 34 to 38, it has a very good effect on the productivity of the continuous process, which may be more advantageous.

The aliphatic polyamide resin is desirably included in an amount of 29 to 33 wt% based on the total weight of the composition.

The aromatic polyamide resin constituting the polyamide resin in the present invention may be exemplified by MACM10-18, PACM10-18, MACMI, MACMT, MXDI, MXD6, PA 6I, PA 6T, etc., but is not limited thereto, and PA 6T and PA 6I mixed aromatic polyamide resins may be desirably used.

The aromatic polyamide desirably has a melting point of 270 °C or higher, which is higher than that of the aliphatic polyamide, and may have a glass transition temperature of 110 °C or higher, desirably 140 °C or higher, in the amorphous form.

It is desirably that the aromatic polyamide resin is contained in an amount of 6 to 10 wt% based on the total weight of the composition, since it advantageously exhibits efficiency of physical properties when mixed with the aliphatic polyamide.

In the present invention, the polyamide resin in which the aliphatic polyamide resin and the aromatic polyamide resin are mixed may be used without particular limitation as long as two types of resins are mixed and used, and MACMI/Polyamide12, PA 6T/Polyamide66, PA 6T/PA 6I/Polyamide66, PA 6T/Polyamide610, PA 6T/Polyamide1010, PA 6T/Polyamide12, Polyamide66/PA 6T/PA 61, and the like may be exemplified. In particular, since Polyamide66 has high crystallinity, productivity is high, and PA 6T and PA 6I have excellent mechanical strength, so Polyamide66/PA 6T/PA 6I including a mixture of them is desirably used.

In the present invention, the coupling agent, which is to secure strong bonding among the aliphatic polyamide resin, the aromatic polyamide resin, and the long-fiber reinforcement, is an amino silane-based coupling agent simultaneously having an amine functional group and a silane functional group at the end of the main chain.

When the amino silane-based coupling agent simultaneously having the amine functional group and the silane functional group is used, the amine functional group has affinity for an amide bond of the aliphatic polyamide and the aromatic polyamide, and the silane functional group has compatibility with the long-fiber reinforcement and thus induces the strong bonding force between the polyamide base resin and the long-fiber reinforcement, thereby providing excellent mechanical strength.

The coupling agent having both an amine functional group and a silane functional group may be, for example, aminopropyltriethoxysilane, vinyltrimethoxysilane, triethoxyvinylsilane, vinyltrisdi-methoxyethoxysilane, trimethoxysilylpropenethiol, bistriethoxysilylpropyltetra-sulfide, triglycidoxypropyltrimethoxysilane, triaminopropyltriethoxysilane, and the like, but is not limited thereto.

The coupling agent is desirably included in an amount of 0.2 to 1.0 wt%, or more desirably 0.3 to 0.5 wt%, based on the total weight of the composition.

When the content of the coupling agent satisfies the above range, compatibility between the polyamide resin and the long-fiber reinforcement may be improved, thereby improving mechanical properties. On the other hand, when the content of the coupling agent is less than 0.2 wt%, compatibility improvement effect is insignificant, and when it exceeds 1.0 wt%, flowability of the resin is lowered due to an excess of the coupling agent, which may cause fiber breakage.

In the present invention, the heat stabilizer, which is to block a degradation reaction proceeding inside the polyamide resin composition, includes at least one selected from a phosphorus-based compound, a sulfur-based compound, and a metal salt compound, and also a resin for a master batch so that it may be added as a master batch.

In the present invention, the heat stabilizer may use the metal salt compound to maintain excellent stability in processing the aromatic polyamide requiring a higher processing temperature than the aliphatic polyamide, and thus may provide excellent mechanical strength.

Examples of the metal salt compound include a halogenated alkali metal salt or a halogenated alkaline-earth metal salt such as CaCl₂, LiCI, NaCl, KCI, LiBr, KBr, Cul, KI, etc., and these inorganic salts are added alone or in the form of a mixture of two or more types.

The method for manufacturing the master batch may be appropriately selected according to any purpose among methods widely known in the art to which the present invention pertains, and a specific manufacturing method thereof will be omitted.

The master batch refers to a pellet-shaped raw material prepared by concentrating and dispersing the resin for the master batch and the heat stabilizer.

That is, the heat stabilizer is mixed with the resin for the master batch, concentrated and dispersed to prepare a master batch, and may be mixed with the polyamide resin of the present invention. Since the heat stabilizer is prepared in a master batch, a kneading property with the polyamide resin is increased, thereby preventing problems such as poor dispersion of the heat extender, reduced heat resistance, and deformation.

The resin for the master batch is at least one selected from Polyamide6, Polyamide46, Polyamide66, Polyamide610, Polyamide6/12, Polyamide1010, Polyamide11, Polyamide1012, Polyamide12, Polyamide1212, and a combination thereof, a resin having a lower melting point or excellent melt fluidity compared to the aliphatic polyamide resin contained in the polyamide resin may be desirably selected, and a polyamide resin having low crystallinity may be more desirably selected.

The heat stabilizer may be included in 3 to 10 wt%, desirably 5 to 8 wt%, or more desirably 6 to 7 wt%, based on the total weight of the master batch, and when the above range is satisfied, it may be advantageous in terms of obtaining an effect of blocking formation of a durable layer that is formed from an external thermal environment by being localized in the polyamide resin, and a degradation reaction proceeding inside the polyamide resin composition.

The heat stabilizer may be included in an amount of 0.2 to 1.0 wt%, or desirably 0.4 to 0.6 wt%, based on the total weight of the composition.

When the content of the heat stabilizer satisfies the above range, a durable layer is formed from an external thermal environment by being localized in the polyamide resin, and a degradation reaction proceeding inside the polyamide resin composition may be blocked. On the other hand, when the content of the heat stabilizer is less than 0.2 wt%, heat applied to the polyamide resin cannot be blocked and thus the decomposition of the polymer cannot be prevented, and when it exceeds 1.0 wt%, it may act as an impurity to reduce mechanical properties.

In the present invention, the long-fiber reinforcement, which is to impart mechanical strength to the polyamide resin, may be glass fibers, carbon fibers, calcium silicate fibers, potassium titanate fibers, aluminum borate fibers, basalt fibers, PE fibers, PAN fibers, arylate fibers, PEEK fibers, nylon fibers, PET fibers, and the like, which are in the form of continuous fiber bundles but is not limited thereto, but the glass fibers are desirable to use in terms of increase of productivity, impregnation property, strength, and rigidity.

The glass fiber is desirably at least one selected from E-glass long-fiber, A-glass long-fiber, C-glass long-fiber, D-glass long-fiber, H-glass long-fiber, S-glass long-fiber, and/or R-glass long-fiber, and may be coated with amino silane or epoxy silane.

The long-fiber reinforcement may have a length of 3 to 50 mm and an average diameter of 5 to 30 µm.

When the length of the fiber is 3 to 50 mm, the long-fiber reinforcement can have sufficient strength in a use requiring a large load while having the characteristics of a long fiber, and have excellent molding easiness. In addition, if the diameter range is 5 to 30 µm, the resin can freely penetrate between the fibers and the impregnation property is improved, and the aspect ratio (L/D) of the weight average fiber length and the number average fiber diameter may satisfy 10 to 100 to be suitable for improving mechanical properties.

The long-fiber reinforcement may be included in an amount of 56 to 63 wt% based on the total weight of the composition. When the content of the long-fiber reinforcement satisfies the range, maximum mechanical strength effects may be obtained.

The polyamide resin composition of the present invention may further include at least one additive selected from the group consisting of an antioxidant, an abrasion resistant agent, a slip agent, an ultraviolet (UV) stabilizer, a neutralizer, a flame retardant, a nucleating agent, an antistatic agent, a brightener, a mold release agent, and a combination thereof according to additionally required properties.

When the polyamide composition of the present invention is used, a molded product having excellent mechanical properties and long-term heat resistance and high strength, and preventing deformation, may be manufactured, thereby improving long-term reliability.

Accordingly, the present invention relates to a molded product manufactured from the aforementioned polyamide resin composition from another aspect.

The molded product manufactured of the polyamide resin composition of the present invention desirably has tensile strength of 310 MPa or more according to ISO 527, flexural strength of 440 MPa according to ISO 178, a flexural modulus of 23.0 GPa or more, and Charpy impact strength of 32.0 KJ/m² or more according to ISO 179.

Accordingly, the present invention may provide a molded product from the thermoplastic resin composition having excellent mechanical properties and particularly, a molded product that is advantageous for injection and extrusion molding and thus is applicable to a product such as an automobile chassis requiring high mechanical properties.

### [Mode for Invention]

Hereinafter, the present invention will be described in more detail through examples. These examples are only for illustrating the present invention, and it will be apparent to those of ordinary skill in the art that the scope of the present invention is not to be construed as being limited by these examples.

### Example 1

An aliphatic polyamide resin of a polyamide 66 resin (21ZLV, Acend), an aromatic polyamide resin of a polyamide 6T resin (M1000, Evonik) and a polyamide 6I resin (M5000, Evonik), an amino silane-based coupling agent (DLC-A10E, Nanjing Capatue Chemical), and a metal salt heat stabilizer master batch including Cul and KI (KN333HSMB, Kolon Plastics, Inc.) were added in each content shown in Table 1 and mixed with a twin-screw kneader TEX-30 (diameter: 30 mm), and then impregnated in H-glass fibers (diameter: 12 to 17 µm, WS3000, Owens Corning) provided from roving in a content shown in Table 1, preparing 10 mm-long polyamide resin pellets.

### Example 2

Polyamide resin pellets were prepared in the same manners as in Example 1 except that the weight ratio of the aromatic polyamides PA 6T and PA 61, was changed from 3:5 to 2:4.

### Example 3

Polyamide resin pellets were prepared in the same manners as in Example 1 except that the weight ratio of the aromatic polyamides PA 6T and PA 6I was changed from 3:5 to 4:6.

### Comparative Examples 1 and 2

Polyamide resin pellets were prepared in the same manner as in Example 1 except that the ratio of the aliphatic polyamide resin and the aromatic polyamide resin was changed as shown in Table 1.

### Comparative Examples 3 and 4

Polyamide resin pellets were prepared in the same manners as in Example 1 except that a coupling agent was added in a content shown in Table 1.

### Comparative Example 5

Polyamide resin pellets were prepared in the same manner as in Example 1 except that an epoxy-based coupling agent was used as shown in Table 1.

**(Table 1)**

| | Polyamide | | | Coupling agent | | Heat stabili zer (wt%) | Glass fiber (wt%) |
|---|---|---|---|---|---|---|---|
| | Aliph atic (wt%) | Arom atic 6T (wt%) | Arom atic 6I (wt%) | Amino silane-based coupling agent (wt%) | epoxy silane-based coupling agent (wt%) | | |
| Example 1 | 31.1 | 3.0 | 5.0 | 0.4 | | 0.5 | 60 |
| Example 2 | 32.3 | 2.3 | 4.5 | 0.4 | | 0.5 | 60 |
| Example 3 | 29.9 | 4.1 | 5.1 | 0.4 | | 0.5 | 60 |
| Com parative Example 1 | 34.1 | 2.0 | 3.0 | 0.4 | | 0.5 | 60 |
| Com parative Example 2 | 28.1 | 4.0 | 7.0 | 0.4 | | 0.5 | 60 |
| Com parative Example 3 | 31.4 | 3.0 | 5.0 | 0.1 | | 0.5 | 60 |
| Com parative Example 4 | 30.4 | 3.0 | 5.0 | 1.1 | | 0.5 | 60 |
| Com parative Example 5 | 31.1 | 3.0 | 5.0 | | 0.4 | 0.5 | 60 |

### < Examples of Measurement >

The polyamide resin pellets Examples 1 to 3 and Comparative Examples 1 to 5 were manufactured into specimens to meet ISO test standards by using an injection machine with a clamping force of 170 tons, and then tensile strength, flexural strength, flexural modulus, and impact strength of the specimens were measured, and the results are shown in Table 2. For reference, tensile strength of 310 MPa or more, flexural strength of 440 MPa or more, flexural modulus of 23.0 GPa or more, and Charpy impact strength of 32.0 KJ/m² or more were evaluated as excellent.
(1) Tensile strength: measured at a test speed of 50 mm/min according to ISO 527
(2) Flexural strength and Flexural modulus: measured at a test speed of 10 mm/min according to ISO 178
(3) Charpy impact strength: In accordance with ISO 179/1eA standard, Charpy notched impact strength was measured at room temperature 23 °C

**(Table 2)**

| | Molded product (specimen) | | | |
|---|---|---|---|---|
| | Tensile strength (MPa) | Flexural strength (MPa) | Flexural modulus (GPa) | Charpy impact strength (KJ/m²) |
| Example 1 | 318 | 445 | 23.6 | 33.4 |
| Example 2 | 315 | 440 | 23.4 | 35.7 |
| Example 3 | 311 | 448 | 23.8 | 34.5 |
| Comparative Example 1 | 305 | 420 | 23.2 | 31.7 |
| Comparative Example 2 | 308 | 430 | 21.1 | 33.4 |
| Comparative Example 3 | 286 | 375 | 21.8 | 26.4 |
| Comparative Example 4 | 303 | 385 | 23.4 | 23.6 |
| Comparative Example 5 | 283 | 368 | 22.4 | 26.8 |

Referring to Table 2, the molded products of Examples 1 to 3 prepared from the polyamide resin compositions prepared by mixing the aliphatic polyamide resin and the aromatic polyamide resin in a weight ratio of 3:1 to 5:1 and including the amino silane-based coupling agent exhibited excellent tensile strength, flexural strength, flexural modulus, and Charpy impact strength, but Comparative Examples 1 and 2 using the aliphatic polyamide resin and the aromatic polyamide resin out of the mixing weight ratio of 3:1 to 5:1 exhibited unsatisfactory tensile strength and flexural strength.

In addition, Comparative Example 3 using the amino silane-based coupling agent in a smaller amount than the reference exhibited low tensile strength, flexural strength, and flexural modulus, but Comparative Example 4 using the amino silane-based coupling agent in an excessive amount also exhibited low tensile strength, flexural strength, and Charpy impact strength.

Comparative Example 5 using the epoxy-based coupling agent instead of the amino silane-based coupling agent also exhibited low tensile strength, flexural strength, and Charpy impact strength.

As the specific parts of the present invention have been described in detail above, for those of ordinary skill in the art, it is clear that these specific descriptions are only preferred embodiments, and the scope of the present invention is not limited thereby. Accordingly, the actual scope of the present invention will be defined by the appended claims and their equivalents.

### [Industrial Applicability]

The polyamide resin composition according to the present invention has excellent mechanical properties and long-term heat resistance, so that it is possible to prevent high strength and deformation, thereby providing a molded product having improved long-term reliability in the field of semiconductor processing equipment, circuit boards, automobiles, and aircraft parts.

## Claims

1. A polyamide resin composition, comprising:
(a) a polyamide resin in which an aliphatic polyamide resin and an aromatic polyamide resin are blended in a weight ratio of 3:1 to 5:1;
(b) a coupling agent having both an amine functional group and a silane functional group;
(c) a heat stabilizer; and
(d) a long-fiber reinforcement.

2. The polyamide resin composition of claim 1, wherein the aliphatic polyamide resin is at least one selected from polyamide 6, polyamide 46, polyamide 66, polyamide 610, polyamide 612, polyamide 6/12, polyamide 1010, polyamide 11, polyamide 1012, polyamide 12, and polyamide 1212.

3. The polyamide resin composition of claim 1, wherein the aromatic polyamide resin is at least one selected from MACM10-18, PACM10-18, MACMI, MACMT, MXDI, MXD6, PA 6I, and PA 6T.

4. The polyamide resin composition of claim 3, wherein the aromatic polyamide resin is a mixture of PA 6T and PA 61.

5. The polyamide resin composition of claim 1, wherein the coupling agent having both the amine functional group and the silane functional group is at least one selected from aminopropyltriethoxysilane, vinyltrimethoxysilane, triethoxyvinylsilane, vinyltrisdi-methoxyethoxysilane, trimethoxysilylpropenethiol, bistriethoxysilylpropyltetra-sulfide, triglycidoxypropyltrimethoxysilane, and triaminopropyltriethoxysilane.

6. The polyamide resin composition of claim 1, wherein the heat stabilizer is at least one selected from a phosphorus-based compound, a sulfur-based compound, and a metal salt compound.

7. The polyamide resin composition of claim 1, wherein the long-fiber reinforcement is at least one selected from a glass fiber, a carbon fiber, a calcium silicate fiber, a potassium titanate fiber, an aluminum borate fiber, a basalt fiber, a PE fiber, a PAN fiber, an arylate fiber, a PEEK fiber, a nylon fiber, and a PET fiber.

8. The polyamide resin composition of claim 1, which includes 35 to 43 wt% of the (a) polyamide resin in which the aliphatic polyamide resin and the aromatic polyamide resin are mixed in a weight ratio of 3:1 to 5:1, 0.2 to 1 wt% of (b) the coupling agent having the amine functional group and the silane functional group, 0.2 to 1 wt% of (c) the heat stabilizer, and 56 to 63 wt% of (d) the long-fiber reinforcement.

9. A molded product manufactured from the polyamide resin composition manufactured from the polyamide resin composition of any one of claim 1 to claim 8.
